(19) Europäisches Patentamt
European Patent Office
Office européen des brevets

(11) **EP 2 062 176 B1**

(12) **FASCICULE DE BREVET EUROPEEN**

(45) Date de publication et mention de la délivrance du brevet:
**18.07.2018 Bulletin 2018/29**

(21) Numéro de dépôt: **07823351.7**

(22) Date de dépôt: **26.07.2007**

(51) Int Cl.:
*G06F 17/50* [(2006.01)]   *B60C 19/00* [(2006.01)]

(86) Numéro de dépôt international:
**PCT/FR2007/001294**

(87) Numéro de publication internationale:
**WO 2008/025891 (06.03.2008 Gazette 2008/10)**

(54) **PROCEDE DE SIMULATION DU COMPORTEMENT PHYSIQUE D'UN PNEU EN SITUATION DE ROULEMENT SUR LE SOL**

VERFAHREN ZUR SIMULATION DES VERHALTENS EINES BELASTET ROLLENDEN REIFENS

METHOD FOR THE SIMULATION OF THE PHYSICAL BEHAVIOUR OF A TYRE ROLLING ON THE GROUND

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **01.09.2006 FR 0607705**

(43) Date de publication de la demande:
**27.05.2009 Bulletin 2009/22**

(73) Titulaire: **Compagnie Générale des Etablissements Michelin**
**63000 Clermont-Ferrand (FR)**

(72) Inventeurs:
• **FEVRIER, Pierre**
  **63100 Clermont-Ferrand (FR)**
• **MARTIN, Hervé**
  **8003 Zürich (CH)**

(74) Mandataire: **Roussy, Delphine**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**EP-A- 1 516 751**

• **EBBOTT T G ; HOHMAN R L ; JEUSETTE J -P ; KERCHMAN V: "Tire temperature and rolling resistance prediction with finite element analysis" TIRE SCIENCE & TECHNOLOGY, vol. 27, no. 1, janvier 1999 (1999-01), pages 2-21, XP009079969 ISSN: 0948-3276**
• **PLUMMER A R: "Model-in-the-loop testing" PROCEEDINGS OF THE INSTITUTION OF MECHANICAL ENGINEERS, PART I, vol. 220, mai 2006 (2006-05), pages 183-199, XP009080014**
• **FUTAMURA, SHINGO; GOLDSTEIN, ART: "Simplifying the Thermal Analysis of A Rolling Tire with the Deformation Index Method" 2004 TECHNICAL MEETING OF THE AMERICAN CHEMICAL SOCIETY, RUBBER DIVISION, 17 mai 2004 (2004-05-17), pages 1-27, XP009079971**
• **CHANG-RO LEE ET AL: "Validation of a FEA Tire Model for Vehicle Dynamic Analysis and Full Vehicle Real Time Proving Ground Simulations" SAE PAPER NUMBER 971100, 1997, pages 1-8, XP002423150**
• **TEODORESCU ET AL: "INFLUENCE FACTORS ON TRUCK TYRE ROLLING RESISTANCE" POLYTECHNICAL UNIVERSITY OF BUCHAREST. SCIENTIFIC BULLETIN. SERIES D: MECHANICAL ENGINEERING, UNIVERSITATEA POLITEHNICA BUCURESTI, BIBLIOTECA CENTRALA,, RO, vol. 62, no. 4, 2000, pages 65-73, XP009079985 ISSN: 1454-2358**

**EP 2 062 176 B1**

**Description**

L'invention concerne, de façon générale, les techniques liées à l'équipement en pneumatiques des véhicules à moteurs.

Plus précisément, l'invention concerne un procédé de simulation du comportement physique d'un pneu équipant un véhicule en situation de roulement sur le sol, avec lequel la bande de roulement du pneu présente une aire de contact incluant une zone de contact adhérent et une zone de contact glissant, ce procédé comprenant au moins les opérations consistant à calculer des efforts longitudinaux et des efforts transversaux, transmis par le pneu entre le sol et le véhicule, en fonction de paramètres dynamiques liés aux conditions physiques de roulement et d'utilisation du pneu et en fonction de paramètres physiques spécifiques du pneu.

Plusieurs exemples de procédés de simulation de pneu sont connus de l'homme du métier, et des exemples en sont donnés dans les documents de brevets EP 1 371 534, EP 1 516 751, et US 2001/0020386.

Le procédé le plus connu, mis au point par M. Pacejka en 1996 et diffusé sous le nom de "Magic Formula", modélise le pneu au moyen de paramètres dépourvus de lien causal avec la physique, et s'avère ainsi impropre à rendre compte de façon fidèle des efforts transmis par un pneu, a fortiori dans des situations de sollicitations importantes et / ou variables.

En plus, Ebbott T. G., Hohman R. L., Jeusette J .-P., et Kerchman V. divulguent dans "Tire Temperature And Rolling Résistance Prédiction With Finite Element Analysis", Tire Science & Technology, vol. 27, no. 1, janvier 1999, pages 2-21 un procédé de modélisation des températures d'un pneu en situation de roulement sur le sol en prenant en compte les effets de l'hystérésis dans l'élastomère. Bien que certains des procédés de simulation plus récents, et notamment ceux décrits dans les documents précités, utilisent un modèle physique plus ou moins complet du pneu, ces procédés ne permettent pas de fournir, en temps réel, des valeurs exploitables des efforts longitudinaux, des efforts transversaux, et du couple d'auto-alignement du pneu.

L'invention, qui se situe dans ce contexte, a pour but de dépasser les limitations des procédés existants.

A cette fin, le procédé de l'invention, par ailleurs conforme à la définition générique qu'en donne le préambule ci-dessus, est essentiellement caractérisé en ce qu'il comprend les opérations consistant à :

- établir, au cours d'une phase préliminaire, par application de lois physiques connues et / ou construites par expérimentation spécifique, et en tant que premier modèle, un modèle des efforts longitudinaux, des efforts transversaux, d'un couple d'auto-alignement lié à l'intensité de ces efforts et à leur distribution dans l'aire de contact, et d'un équilibre des forces élémentaires de cisaillement et de glissement du pneu en un point supposé unique de passage entre les zones de contact adhérent et glissant, ce premier modèle prenant la forme d'un système d'équations respectives exprimées en fonction des paramètres dynamiques, des paramètres spécifiques, et de l'abscisse du point de passage;
- attribuer, en vue d'une application numérique, des valeurs aux paramètres dynamiques et aux paramètres spécifiques; et
- résoudre par approximations successives, au cours d'une phase itérative d'application numérique constituée d'une succession de cycles de calcul, et au moins à partir de valeurs antérieurement connues ou estimées de l'abscisse du point de passage, des efforts transversaux, et du couple d'auto-alignement, de nouvelles valeurs de l'abscisse du point de passage, des efforts transversaux, et du couple d'auto-alignement qui résolvent le système d'équations du premier modèle pour les valeurs attribuées aux paramètres dynamiques et aux paramètres spécifiques, ce dont il résulte que les efforts longitudinaux, les efforts transversaux, et le couple d'auto-alignement du pneu peuvent être calculés en temps réel pendant le roulement du véhicule.

De préférence, ce procédé comprend en outre une opération mise à jour après la fin de la phase itérative et consistant à mettre au moins à jour les paramètres dynamiques pour tenir compte des évolutions subies par ces paramètres pendant le temps d'exécution de la phase itérative, et à engager une nouvelle phase itérative.

Chaque nouveau cycle de calcul de chaque phase itérative comprend par exemple les opérations consistant au moins à :

- calculer une nouvelle valeur provisoire de l'abscisse du point de passage à partir des équations d'équilibre des forces élémentaires et des valeurs antérieurement connues ou estimées des efforts transversaux et du couple d'auto-alignement;
- calculer, à partir de la nouvelle valeur provisoire de l'abscisse du point de passage et des équations liant les efforts transversaux et le couple d'auto-alignement aux paramètres dynamiques, aux paramètres spécifiques, et à l'abscisse du point de passage, de nouvelles valeurs des efforts transversaux et du couple d'auto-alignement utilisables pour un éventuel cycle de calcul ultérieur;
- interrompre conditionnellement ladite phase itérative au moins lorsque l'écart entre la nouvelle valeur provisoire de l'abscisse du point de passage et la valeur antérieurement connue ou estimée de cette abscisse est inférieur à une limite de précision prédéterminée; et

- à l'interruption de ladite phase itérative, affecter aux efforts transversaux et au couple d'auto-alignement, en tant que valeurs pour cette phase, les nouvelles valeurs des efforts transversaux et du couple d'auto-alignement obtenues au dernier cycle de calcul.

Dans toutes ses formes, le procédé de simulation de l'invention comprend en outre les opérations consistant à :

- prendre en compte, dans le premier modèle établi au cours de la phase préliminaire, l'influence de la température sur les valeurs de certains au moins des paramètres spécifiques;
- établir, au cours de cette phase préliminaire, par application de lois physiques connues et / ou construites par expérimentation spécifique, et en tant que second modèle, un modèle local d'échauffement exprimant des variations d'une température de contact de la bande de roulement avec le sol depuis l'entrée jusqu'à la sortie de l'aire de contact par contact de la bande de roulement avec le sol et glissement;
- établir, au cours de cette phase préliminaire, par application de lois physiques connues et / ou construites par expérimentation spécifique, et en tant que troisième modèle, un modèle global d'échauffement et de flux thermique, ce troisième modèle prenant la forme d'un système d'équations exprimant des variations sur une période de tour de roue d'une température périphérique de la bande de roulement et d'une température interne du pneu en fonction de valeurs antérieurement connues ou estimées des températures périphérique et interne, d'un coefficient de conduction thermique de la bande de roulement, et de phénomènes à composante thermodynamique tels que déformations internes subies par le pneu, échanges thermiques entre le pneu et son environnement, et glissement de la bande de roulement sur le sol;
- accepter, en tant que paramètres dynamiques supplémentaires, la température du sol, la température de l'air, et la température initiale du pneu;
- calculer, à chaque cycle de calcul de chaque phase itérative, les nouvelles valeurs de l'abscisse du point de passage, des efforts transversaux et du couple d'auto-alignement en utilisant le premier modèle enrichi de l'influence de la température en utilisant le premier et le second modèle; et
- à l'interruption de chaque phase itérative, mettre à jour les valeurs des températures périphérique et interne pour tenir compte des évolutions subies par ces températures depuis la fin de la phase itérative précédente.

Le premier modèle est avantageusement enrichi en prenant au moins en compte l'influence de l'évolution de la température de contact sur la valeur du coefficient de frottement de la gomme du pneu sur le sol.

Le premier modèle peut aussi être enrichi en prenant en compte l'influence de la température interne du pneu sur la valeur du module de cisaillement du mélange caoutchoutique de la bande de roulement du pneu.

De préférence, le second modèle de calcul utilise la température périphérique du pneu, obtenue par application du troisième modèle, pour le calcul de la température de contact en entrée de la surface de contact.

Les temps de calcul peuvent encore être réduits en prévoyant que chaque phase itérative soit précédée d'une phase préparatoire au cours de laquelle sont calculées des grandeurs contingentes, incluant les dimensions de l'aire de contact, au moyen d'un sous-ensemble desdites équations et en fonction des valeurs attribuées aux paramètres dynamiques et aux paramètres spécifiques, chaque grandeur contingente étant exploitée dans ladite phase itérative avec une valeur qui lui a été attribuée lors de la phase préparatoire.

L'invention concerne encore l'application du procédé tel que précédemment défini à la simulation en temps réel du comportement dynamique d'un véhicule doté d'un châssis et de plusieurs pneus en situation de roulement sur le sol, cette application étant caractérisée en ce que le premier modèle au moins est exploité pour chaque pneu et associé à un même modèle dynamique de châssis, que le modèle de châssis fournit au moins audit premier modèle, pour chaque pneu, les valeurs de certains au moins des paramètres dynamiques, et que le modèle de châssis exploite, pour chaque pneu, les valeurs des efforts longitudinaux, des efforts transversaux, et du couple d'auto-alignement obtenues par la mise en oeuvre du premier modèle au moins.

Cette application fournit des résultats encore plus précis dans le cas où l'ensemble des premier, deuxième et troisième modèles coopèrent avec le modèle dynamique de châssis comme précédemment indiqué pour le premier modèle.

D'autres caractéristiques et avantages de l'invention ressortiront clairement de la description qui en est faite ci-après, à titre indicatif et nullement limitatif, en référence aux dessins annexés, dans lesquels :

- la figure 1 est une vue schématique en élévation d'une roue équipée d'un pneu auquel le procédé de l'invention est appliqué;

- la figure 2 est une vue schématique de dessus agrandie de l'aire de contact du pneu de la figure 1 avec le sol;

- la figure 3 est une vue schématique de face du pneu de la figure 1;

- la figure 4 est une vue schématique partielle et en coupe radiale d'un pneu représenté dans deux situations différentes de sollicitations;

- la figure 5 est une vue schématique en élévation d'un pneu représenté dans deux situations différentes de sollicitations;

- la figure 6 est une vue schématique de dessus d'un pneu subissant une torsion;

- la figure 7 est un schéma récapitulant les différentes grandeurs intervenant dans la mise en oeuvre du procédé de l'invention;

- la figure 8 est une vue schématique de dessus d'un pneu subissant diverses sollicitations;

- la figure 9 est une vue de dessus agrandie de l'aire de contact d'un pneu subissant diverses sollicitations, et sur laquelle apparaissent la trace de points et de trajectoires caractéristiques;

- la figure 10 représente, de façon tridimensionnelle, la loi liant le coefficient d'adhérence à la pression de contact, à la température de contact, et à la vitesse de glissement;

- la figure 11 représente la loi liant le module de cisaillement de la gomme du pneu à la température; et

- la figure 12 est un schéma récapitulant les phénomènes thermiques pris en compte dans le modèle thermique global.

Comme annoncé précédemment, l'invention concerne notamment un procédé de simulation du comportement physique d'un pneu équipant un véhicule en situation de roulement sur le sol.

Dans une situation de roulement d'un pneu au sol, la bande de roulement du pneu présente avec le sol une aire de contact formée d'au moins une zone de contact adhérent et d'au moins une zone de contact glissant.

La finalité de ce procédé est de fournir, en fonction d'un certain nombre de grandeurs d'influence, les valeurs de divers efforts qui sont transmis par le pneu entre le sol et le véhicule.

Pour optimiser la compréhension de l'invention, la présente description fera usage des conventions d'écriture ci-après, dont une partie est déjà connue de l'homme du métier et utilisée dans des modèles de pneu existants.

| | |
|---|---|
| $\delta$ | Angle de dérive |
| $\delta'$ | Angle de dérive au niveau des nappes sommet |
| $\alpha_1$ | Angle de mise à plat (plysteer) |
| $\gamma$ | Angle d'inclinaison (carrossage) |
| $\tau$ | Taux de glissement longitudinal |
| Fx | Effort longitudinal |
| Fy | Effort transversal |
| Fz | Charge |
| $V$ | Vitesse des points du sol |
| $W_x$ | Vitesse des points du sommet suivant son axe |
| Mz | Couple d'auto-alignement |
| Ny | Composante du couple d'auto-alignement liée à l'effort Fy |
| Nx | Composante du couple d'auto-alignement liée à la distribution des efforts Fx dans la largeur de l'aire de contact |
| $R_L$ | Rigidité latérale du pneu |
| $R_{LL}$ | Rigidité longitudinale du pneu |

(suite)

| $k_T$ | Rigidité de torsion du pneu |
|---|---|
| $S_2$ | Souplesse à la flexion sur chant du bloc sommet |
| $\mu$ | Coefficient d'adhérence dynamique entre la gomme du pneu et le sol : $\mu(p, Vg, Ts)$ |
| $\mu_0$ | Coefficient d'adhérence statique |
| $Lx$ | Longueur caractéristique de l'aire de contact |
| $Ly$ | Largeur de l'aire de contact |
| $ent$ | Taux d'entaillement de la bande de roulement |
| $AssX$ | Coefficient d'assouplissement longitudinal de la bande de roulement |
| $AssY$ | Coefficient d'assouplissement latéral de la bande de roulement |
| $G^*$ | Module de cisaillement du mélange caoutchoutique de la bande de roulement du pneu |
| $e_{KM}$ | Epaisseur de la bande de roulement |
| $a$ | Demi-longueur de l'aire de contact |
| $b$ | Abscisse de début de glissement dans l'aire de contact |
| Ti | Profil de température interne de la gomme, entre la surface du pneu et les nappes sommet |
| Ts | Température de surface moyenne de la bande de roulement |
| Tc | Température de contact à l'interface entre la gomme et le sol |
| Vg | Vitesse de glissement entre le pneu et le sol |
| $X_N$, $Y_N$ | Coordonnées des points du sommet du pneu (zone interne de la bande de roulement, à la base du pneu, à la verticale de l'aire de contact) |
| $X_k$, $Y_k$ | Coordonnées des points de la bande de roulement au niveau de l'interface avec le sol |

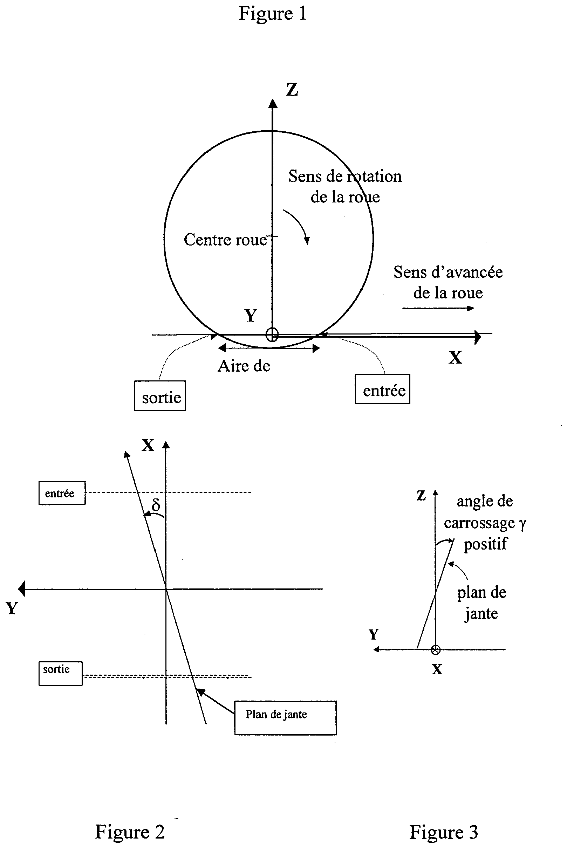

Les figures 1 à 3 précisent le repère utilisé comme référence.
Ce repère est défini par :

O : le point origine du repère au centre de l'aire de contact;

OX : l'axe parallèle au vecteur vitesse;

OY : l'axe perpendiculaire à OX, parallèle au plan du sol quel que soit le carrossage;

Dans ce repère, la convention de signe impose que : pour $\tau > 0$, un effort longitudinal est généré dans la direction de l'axe OX; pour $\delta > 0$, un effort latéral est généré dans la direction de l'axe OY, et pour $\gamma > 0$, un couple dit d'auto-alignement Mz négatif est généré, provoquant une poussée latérale négative (c'est-à-dire orientée dans la direction opposée à OY).

Les efforts transmis par le pneu entre le sol et le véhicule comprennent des efforts longitudinaux *Fx,* des efforts transversaux *Fy,* et un couple d'auto-alignement *Mz,* qui est lié à l'intensité des efforts longitudinaux et transversaux et à leur distribution dans l'aire de contact.

Les grandeurs d'influence comprennent typiquement d'une part des paramètres dynamiques, c'est-à-dire variables au moins en fonction du temps, et liés aux conditions physiques de roulement et d'utilisation du pneu, et d'autre part des paramètres physiques qui sont spécifiques au pneu considéré.

Les paramètres dynamiques comprennent l'angle de dérive, le taux de glissement, l'angle de carrossage, la charge, la vitesse, la pression de gonflage, les températures air et sol, les températures initiales du pneumatique, et le temps.

Les paramètres spécifiques comprennent les dimensions de l'aire de contact (longueur, largeur, coefficient de forme), le profil de pression p(x) le long de l'aire de contact, les rigidités longitudinale Kx et transversale Ky de la bande de roulement, les rigidités de la structure du pneu, à savoir la rigidité latérale RL, la rigidité longitudinale RLL, la rigidité radiale Rrr, et la rigidité de torsion $k_T$, la rigidité 1/S2 du bloc sommet, une loi d'adhérence $\mu$ du couple gomme/sol, des paramètres de transfert de longueur entre reliefs du pneu ("ribs"), et sont reliées aux paramètres dynamiques par des relations construites par expérimentation spécifique, dont il est possible de rendre compte au moyen des expressions données ci-après à titre d'exemple.

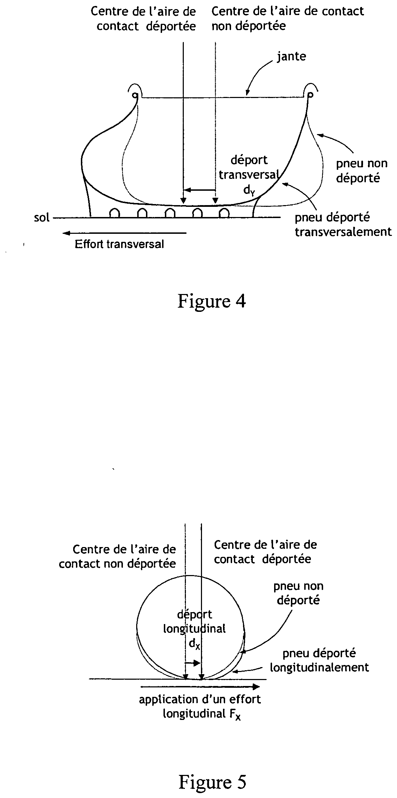

La rigidité latérale correspond à un déport *dy* de l'aire de contact (cf. figure 4) par rapport au plan de roue sous l'effet d'un effort latéral :

$$R_L = R_{L0} + R_{Lp}\, p$$

où $R_{L0}$ [N/m] représente la partie structurelle et $R_{Lp}$ [N/m/bars] la partie pneumatique, *p* étant la pression exprimée en bars.

La rigidité longitudinale correspond à un déport dx de l'aire de contact (cf. figure 5) suivant l'axe longitudinal de la roue en présence d'un effort longitudinal *Fx* :

$$R_{LL} = R_{LL0} + R_{LLp}\, p$$

où $R_{LL0}$ [N/m] représente la partie structurelle et $R_{LLp}$ [N/m/bar] la partie pneumatique, *p* étant la pression exprimée en bars.

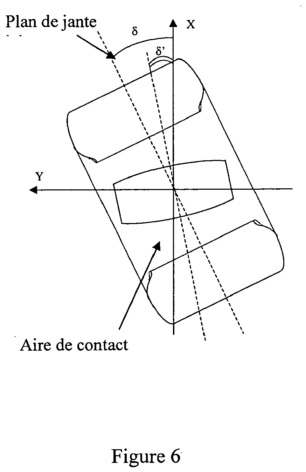

Le développement du couple d'auto-alignement *Mz* entraîne une torsion d'un angle $\Delta\delta$ de l'enveloppe autour de l'axe Z par rapport au plan de jante (cf. figure 6) :

$$\Delta\delta = \frac{M_z}{k_T}$$

La rigidité de torsion de l'enveloppe contient une composante structurelle $k_{T0}$ [N.m/rad] et une composante $k_{TZ}$ [m/rad] qui traduit la variation de la rigidité de torsion avec la charge par exemple de la forme :

$$k_T = \left(k_{T0} + k_{TZ} F_Z\right)\sqrt{p}$$

L'angle de dérive réel $\delta'$ pris par l'aire de contact s'exprime en fonction de l'angle de dérive au niveau de l'axe de la roue de la manière suivante :

$$\delta' = \delta + \frac{M_z}{k_T}$$

La déformation du sommet peut être modélisée par une loi du second degré avec une courbure au centre de l'aire de contact qui s'exprime par exemple de la manière suivante :

$$\rho = S_2 Fy$$

où $S_2$ est un paramètre représentatif de la souplesse à la flexion sur chant.

La rigidité radiale relie la charge Fz à la flèche du sommet par rapport à la jante. Elle dépend de la pression et se décompose en deux termes : un terme structurel $R_{R0}$ [N/m] qui correspond à la rigidité radiale du pneumatique à pression nulle, et un terme pneumatique $R_{RP}$ [N/m/bar] :

$$R_R = R_{R0} + R_{Rp}\, p$$

La longueur de l'aire de contact est définie par :

$$Lx = a\sqrt{\frac{F_z}{p^c}} + b\frac{F_z}{p^c},$$

cette formulation permettant de prendre en compte l'effet de la charge et de la pression de gonflage.

La largeur de l'aire de contact est définie par :

$$Ly = Ly_c + 2 * Ly_e$$

où $Ly_c$ est la largeur des reliefs au centre du pneu et $Ly_e$ la largeur des reliefs aux épaules, calculée par la formule ci-dessus :

$$Ly_e = c \arctan\left[ d\left( \frac{F_z}{p^{0.6}} - e \right)^2 \right].$$

La surface effective de l'aire de contact est définie comme le produit de la largeur par la longueur, pondéré par l'entaillement et un coefficient de forme :

$$S_{ADC} = C_{forme}\ ent\ Lx\ Ly$$

Le coefficient de forme $C_{forme}$ prend en compte la variation de forme de l'aire de contact en fonction de la charge.

Lors de l'écrasement de la structure du pneu, le sommet prend une inclinaison $\alpha_1$ qui est une grandeur caractéristique de la structure étudiée.

Le profil de pression entre l'entrée et la sortie de l'aire de contact est déterminé de la manière suivante :

$$p(x) = \frac{2n+1}{2n} \frac{F_z}{S_{ADC}} \left( 1 - \left( \frac{x}{Lx/2} \right)^{2n} \right),$$

Cette répartition de pression est telle que :

$$\int_{-Lx/2}^{Lx/2} p(x)\,dx = \frac{F_z}{S_{ADC}}.$$

A faible charge, le profil est plutôt de type parabolique ($n = 1$). A forte charge, le profil de pression est quasi uniforme.

De préférence, $n$ est un réel variant linéairement avec la longueur de l'aire de contact $Lx$. Pour éviter qu'aux faibles charges $n$ ne devienne trop faible (voire négatif), $n$ est borné inférieurement à 1 de la façon suivante :

$$n = \max(1, n_a Lx + n_b).$$

Le procédé de l'invention utilise au moins un modèle mécanique (premier modèle), de préférence couplé à un modèle thermique (deuxième modèle).

Chacun de ces modèles est établi au cours d'une phase préliminaire du procédé et prend la forme d'un système d'équations.

Ces modèles peuvent être établis de plusieurs manières, et notamment en utilisant des lois physiques connues de l'homme du métier, ou des lois plus ou moins approchées construites par expérimentation spécifique, de sorte que les équations par lesquelles s'expriment ces modèles peuvent prendre de multiples formes.

Ces modèles se caractérisent donc essentiellement par leurs grandeurs d'entrée, leurs grandeurs de sortie, et le fait qu'ils prennent chacun la forme d'un système d'équations rendant compte de phénomènes physiques observables en fonction de propriétés physiques quantifiables.

Les grandeurs de sortie du modèle mécanique sont les efforts longitudinaux Fx, les efforts latéraux Fy, et le couple d'auto-alignement Mz.

Les grandeurs de sortie du modèle thermique sont la température périphérique ou de surface Ts de la bande de roulement, et la température interne Ti de cette bande.

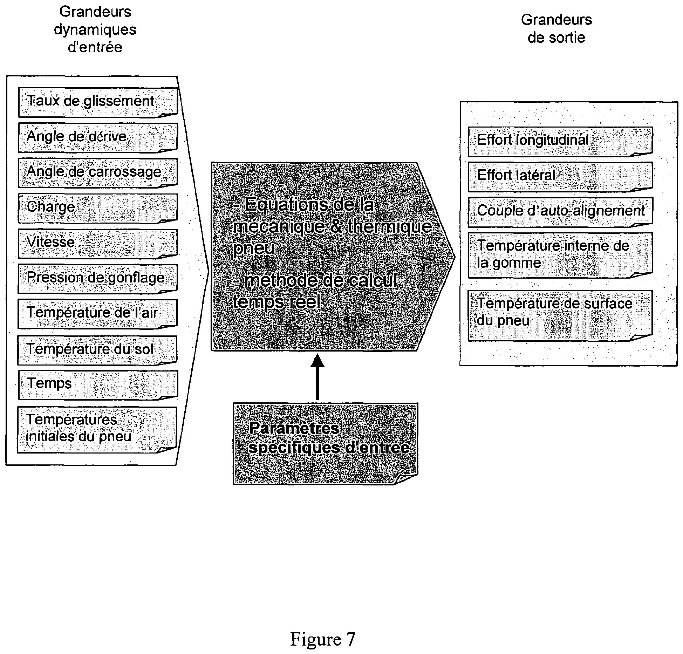

Les grandeurs d'entrée et de sortie des deux modèles sont recensées sur la figure 7.

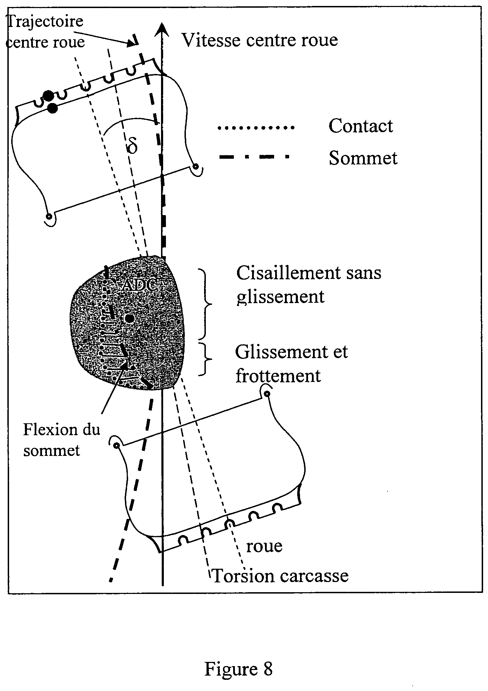

Le modèle mécanique se caractérise en outre par le fait qu'il est établi en considérant d'une part que l'aire de contact comprend deux zones (figure 8), à savoir une zone de contact adhérent où l'effort est contrôlé par le cisaillement de la bande de roulement à déplacement imposé et une zone de contact glissant où l'effort est contrôlé par le coefficient de frottement entre la gomme et le sol, et en considérant d'autre part qu'il existe un point unique N d'abscisse "b" marquant le passage entre la zone de contact adhérent et la zone de contact glissant.

Les équations sont formulées selon ce principe, ce qui permet d'obtenir des expressions rapides à résoudre.

Un exemple de modèle mécanique est donné ci-après.

Dans cet exemple, la modélisation du fonctionnement de l'aire de contact est basée sur une approche de type « poil de brosse » avec une première phase de cisaillement en entrée de l'aire de contact et une seconde phase de glissement. Il est supposé que ces deux phases sont distinctes, uniques et connexes, et qu'il n'y a aucun mécanisme parasite de reprise de cisaillement lors de la phase de glissement.

Tous les développements qui suivent font l'hypothèse que les angles de dérive restent modérés (inférieurs à 20 degrés environ), de sorte que l'approximation $\tan(\delta) \approx \delta$ est valide et sera faite systématiquement.

$Kx$ et $Ky$ désignent les rigidités de la bande de roulement, qui peuvent être reliés au module de la gomme et aux caractéristiques de la sculpture de préférence selon la relation suivante :

$$\begin{cases} K_X = \dfrac{G * ent}{\dfrac{h_{scre}}{AssX} + h_{sc}} \\ K_Y = \dfrac{G * ent}{\dfrac{h_{scre}}{AssY} + h_{sc}} \end{cases}$$

$h_{scre}$ étant l'épaisseur de la sculpture, et $h_{sc}$ l'épaisseur de la sous-couche, telles que $e_{KM} = h_{scre} + h_{sc}$.

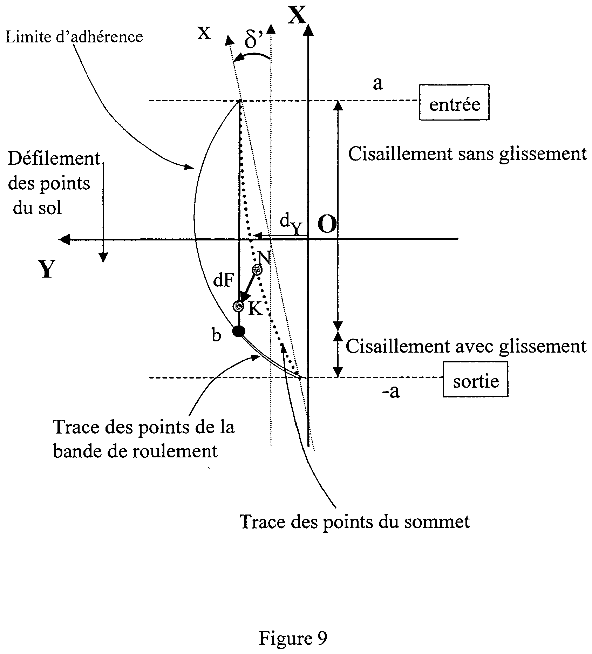

La figure 9 est un schéma fonctionnel de l'aire de contact. Le segment NK définit un élément de la bande de roulement ("poil de brosse"). N est le point situé au niveau du sommet et K est le point de la bande de roulement au niveau du sol. Le point d'abscisse b représente la transition entre le contact avec adhérence et le contact glissant.

En entrée de l'aire de contact (voir figure 9), l'élément de gomme de la bande de roulement n'est pas cisaillé ($X_N = X_K$).

Le cisaillement de la gomme a en fait deux origines : une mise en dérive de la roue d'un angle $\delta$ et une différence entre la vitesse du point N du sommet et la vitesse de défilement des points du sol.

Sous l'hypothèse d'une déformation uniforme dans l'épaisseur de la bande de roulement, l'effort élémentaire généré par le cisaillement d'un l'élément de cette bande peut s'écrire :

$$dF_X = K_X (X_K - X_N) dS$$

$$dF_Y = K_Y (Y_K - Y_N) dS$$

où $dS$ est la surface élémentaire de l'élément NK de la bande de roulement.

L'équation de la trajectoire des points du sommet peut alors être est approximée par la relation suivante :

$$Y_N = \delta' X_N - \frac{1}{2} S_2 F_Y X_N{}^2 + \frac{F_Y}{R_L},$$

expression dans laquelle $\delta'$ est l'angle de dérive du sommet, qui diffère de l'angle de dérive du fait de la torsion de la structure du pneu, et qui répond à l'équation :

$$\delta' = \delta + \alpha 1 + \frac{M_z}{k_T} \ .$$

En supposant que la relation $Y_K(a) = Y_N(a)$ soit satisfaite en entrée de l'aire de contact, il vient (équation 1) :

$$Y_K - Y_N = \delta'(a - X_N) - \frac{1}{2} S_2 F_Y \left( a^2 - X_N^{\ 2} \right)$$

En posant :
$V$ la vitesse des points du sol,
$W_x$ la vitesse des points du sommet suivant son axe, et

$$\tau = \frac{W_X - V}{V},$$

l'expression $X_K - X_N$ devient (équation 2) :

$$X_K - X_N = (a - X_N)\frac{\tau}{1 + \tau}$$

Par définition, $\tau$ correspond au taux de glissement longitudinal.

Les composantes de la vitesse de glissement sont données par :

$$\begin{cases} Vg_X = \dfrac{d(X_K - X_N)}{dt} = W_X - V \\ Vg_Y = \dfrac{d(Y_K - Y_N)}{dt} = (\delta' - S_2 F_Y X_N) W_X \end{cases}$$

Dans la partie glissante de l'aire de roulement, les efforts élémentaires sont générés par le frottement entre la gomme et le sol et la direction des efforts est colinéaire au vecteur cisaillement, ce qui se traduit par :

$$\frac{dF_X}{dF_Y} = r_K \frac{(X_K - X_N)}{(Y_K - Y_N)} \quad \text{avec} \quad r_K = \frac{K_X}{K_Y} \ .$$

En notant $\beta = \delta' - \frac{1}{2} S_2 F_Y (a + X_N)$, il vient :

$$\frac{dF_X}{dF_Y} = r_K \frac{\tau}{(1 + \tau)\beta} \ .$$

Les efforts élémentaires dans la zone de frottement s'écrivent :

$$dF_X = \frac{r_K \tau}{\sqrt{(r_K \tau)^2 + (1 + \tau)^2 \beta^2}} \mu(p, Vg, T) p \, dS$$

$$dF_Y = \frac{(1+\tau)\beta}{\sqrt{(r_K\tau)^2 + (1+\tau)^2\beta^2}} \mu(p,Vg,T)p\,dS$$

L'abscisse $b$ du point N à partir duquel est supposé se produire le glissement du pneu sur le sol correspond à l'équilibre entre les efforts élémentaires de cisaillement et d'adhérence, cet équilibre étant représenté par l'équation 3 :

$$[K_X(X_K - X_N)]^2 + [K_Y(Y_K - Y_N)]^2 = [\mu_0 p]^2$$

où $\mu_0$ est le coefficient d'adhérence statique exprimé au point d'abscisse $b$.

Bien qu'il puisse a priori exister dans l'aire de contact plusieurs points de transition entre une zone d'adhérence et une zone glissante, le modèle mécanique utilisé dans l'invention fait avantageusement l'hypothèse de l'unicité de ce point de transition. En d'autres termes, dès qu'apparaît un glissement dans l'aire de contact, ce glissement perdure jusqu'à la sortie de cette aire de contact.

Les équations représentatives du bilan des efforts sous réserve de cette hypothèse d'unicité du point de passage sont données ci-après.

Il est toutefois possible d'en donner une version plus générale, correspondant au cas où plusieurs points de passage existeraient dans l'aire de contact.

Les efforts appliqués au centre de la roue équipée du pneu considéré sont obtenus en intégrant les efforts élémentaires se développant à la surface de l'aire de contact :

$$F_X = \int_{-Ly/2}^{Ly/2} \int_b^a K_X(X_K - X_N)\,dS + \int_{-Ly/2}^{Ly/2} \int_{-a}^b \frac{r_K\tau}{\sqrt{(r_K\tau)^2 + (1+\tau)^2\beta^2}} \mu(p,Vg,T)p\,dS$$

$$F_Y = \int_{-Ly/2}^{Ly/2} \int_b^a K_Y(Y_K - Y_N)\,dS + \int_{-Ly/2}^{Ly/2} \int_{-a}^b \frac{(1+\tau)\beta}{\sqrt{(r_K\tau)^2 + (1+\tau)^2\beta^2}} \mu(p,Vg,T)p\,dS$$

L'intégration conduit respectivement aux équations 4 et 5 suivantes :

$$F_X = K_X Ly\left[\frac{1}{2}\frac{\tau}{1+\tau}(a-b)^2\right] + Ly\,ent \int_{-a}^b \frac{r_K\tau}{\sqrt{(r_K\tau)^2 + (1+\tau)^2\beta^2}} \mu(p,Vg,T)pdx$$

$$F_Y = K_Y Ly\left[\frac{1}{2}\delta'(a-b)^2 - \frac{S_2 F_Y}{6}(2a^3 - 3a^2b + b^3)\right] + Ly\,ent \int_{-a}^b \frac{(1+\tau)\beta}{\sqrt{(r_K\tau)^2 + (1+\tau)^2\beta^2}} \mu(p,Vg,T)pd$$

Le couple d'auto-alignement $M_Z$ a deux contributions, à savoir un moment $N_Y$ lié à l'effort $F_Y$ dont le centre de poussée est décalé par rapport au centre de l'aire de contact, et un couple $N_X$ lié à la distribution des efforts $F_X$ dans la largeur de l'aire de contact. En général, le couple $N_X$ est un couple de rappel, sauf dans des cas particuliers de fort couple moteur.

Dans le même cadre d'hypothèses que précédemment, le moment $N_Y$ peut être calculé directement par l'équation 6:

$$N_Y = K_Y Ly\left[\frac{1}{6}\delta'(a^3 - 3ab^2 + 2b^3) - \frac{S_2 F_Y}{8}(a^2 - b^2)^2\right] + Ly\,ent \int_{-a}^b \frac{(1+\tau)\beta}{\sqrt{(r_K\tau)^2 + (1+\tau)^2\beta^2}} \mu(p,Vg,T)pxdx$$

Le couple $N_X$ est engendré par une distribution non uniforme des efforts $F_X$ dans la largeur de l'aire de contact, qui tend à s'amplifier lors de la mise en trapèze de l'aire de contact sous l'effet du déport ou du carrossage. Dans une approche de modélisation à une seule bande de relief du pneu, la distribution des efforts $F_X$ dans la largeur de l'aire de contact n'est pas directement accessible. Ainsi, le couple Nx est modélisé par une relation ad hoc dont une formulation mathématique est donnée ci-après à titre indicatif en fonction du moment $N_Y$ et du carrossage (équation 7) :

$$Nx = \beta_1(Fz)Ny + \beta_2(Fz, \delta)\gamma$$

Plusieurs formules existent pour les paramètres $\beta1$ et $\beta2$.

Un exemple de modèle thermique est donné ci-après.

Ce modèle comprend un modèle thermique local, prenant essentiellement en compte les phénomènes thermiques liés au contact de la bande de roulement avec le sol dans l'aire de contact et au glissement relatif de la bande de roulement dans une partie de l'aire de contact, et un modèle global, prenant en compte l'ensemble des phénomènes d'échauffement et des échanges thermiques du pneu sur un tour de roue.

La formulation des efforts globaux du pneumatique est basée sur une décomposition en effort de cisaillement de la bande de roulement et en effort de frottement. L'effort de frottement est fonction du coefficient d'adhérence $\mu$ entre la gomme et le sol, ce coefficient dépendant de la pression, de la vitesse de glissement et de la température de contact.

La température de contact dans l'aire de contact est modélisée de la façon suivante (modèle thermique local).

Lors du passage de la gomme dans l'aire de contact, la température de contact évolue en fonction de la conduction thermique et du frottement entre la gomme et le sol. La température dans le contact peut être calculée de différentes manières, par exemple à l'aide de méthodes de discrétisation par différences finies.

Le procédé décrit ci-après optimise le temps de calcul tout en conduisant à une précision largement suffisante.

En faisant l'hypothèse de deux matériaux semi-infinis avec une température homogène (*Ts* pour la gomme et *Tsol* pour le sol), la température de surface, lorsque les deux massifs sont brusquement mis en contact parfait, s'écrit :

$$T_0 = \frac{T_S e_g + T_{sol} e_{sol}}{e_g + e_{sol}},$$

où $e_g$ et $e_{sol}$ sont respectivement l'effusivité de la gomme et du sol.

Lorsqu'il y a glissement entre la gomme et le sol, le flux de frottement $\varphi_F$ génère une élévation de température de surface, qui lorsque le flux est constant, s'exprime par :

$$Tc(t) = T_0 + 2\frac{\alpha}{e_g}\varphi_F\sqrt{\frac{t}{\pi}},$$

où $\alpha$ est le coefficient de partage qui détermine la proportion de flux qui pénètre dans la gomme. Dans le cas d'un contact parfait, ce coefficient s'exprime par :

$$\alpha = \frac{e_g}{e_g + e_{sol}}.$$

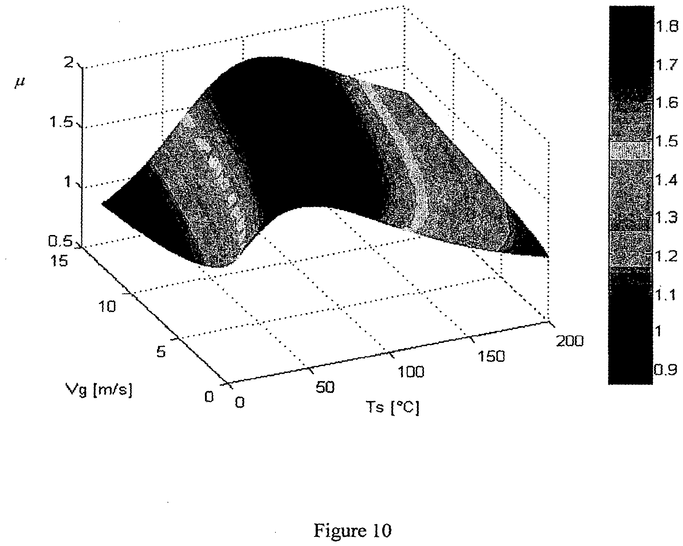

Pour la loi d'adhérence gomme sol, dont la figure 10 illustre la dépendance vis-à-vis des paramètres *Vg,* et *Tc,* plusieurs formulations mathématiques évidentes pour l'homme de l'art permettent de reproduire l'évolution avec la température, vitesse et pression à partir d'expérimentations spécifiques.

A titre d'exemple, on peut utiliser la formule :

$$\mu(T_C, Vg, P_c) = \left(e_1.P_c^{e_2} + e_3\right)\left[\mu_1 + (\mu_2 - \mu_1)\exp\left(-a^2\log^2\left(\frac{Tc}{T_1}\right)\right)\right]$$

avec $T_1 = T_0 + a_2 \log_{10}(Vg/V_0)/[a_1 - \log_{10}(Vg/V_0)]$, où
$\mu_1, \mu_2 T_0, a, a_1, a_2, e_1, e_2, e_3, V_0$ sont des constantes du modèle

Comme le montre la figure 10, le coefficient d'adhérence $\mu$ a une évolution complexe avec la température et la vitesse de glissement : aux faibles températures, ce coefficient augmente avec la température; aux fortes températures, c'est l'inverse. Le coefficient $\mu$ passe donc par un maximum avec la température. Ce maximum est différent selon la valeur de la vitesse de glissement. Plus la vitesse de glissement est élevée, plus le maximum de ce coefficient est obtenu à des températures élevées.

Le modèle thermique global calcule le profil de température dans l'épaisseur de la gomme en moyenne par tour de roue et dans la largeur de la bande de roulement. Ce modèle permet d'obtenir la température Ti de l'intérieur de la bande de roulement, qui détermine la rigidité G*(Ti), ainsi que la température de surface (ou périphérique) Ts de la bande de roulement en entrée d'aire de contact, qui est utilisée pour le calcul thermique dans l'aire de contact (modèle local).

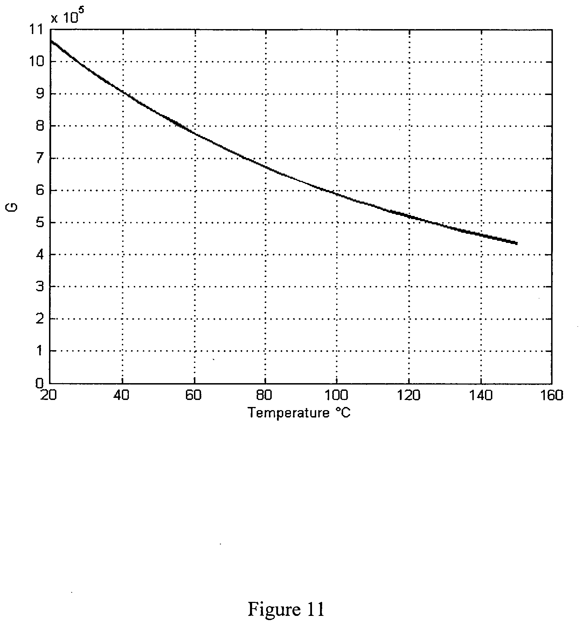

Un exemple de loi liant la rigidité à la température est illustré à la figure 11. En fait, cette loi est propre à chaque matériau utilisé et dépend de la formulation des mélanges constitutifs de la gomme du pneu. D'une manière générale, lorsque la température du mélange augmente, sa rigidité diminue.

Le modèle thermique global prend en compte les mécanismes suivants :

- la conduction dans la gomme;
- l'échauffement par le frottement entre la gomme et le sol;
- l'échauffement lié aux pertes dans la gomme; et
- le refroidissement par conduction avec le sol et convection avec l'air.

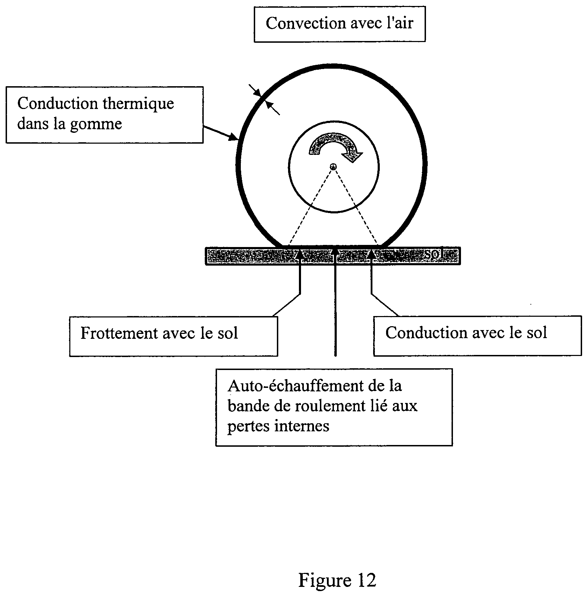

La figure 12 rappelle de façon schématique l'ensemble de ces mécanismes.

En faisant l'hypothèse d'une homogénéité de température dans la largeur de la bande de roulement et sur un tour de roue, il est possible d'obtenir l'équation unidimensionnelle de la chaleur dans le système de coordonnées polaires liée à la roue :

$$\frac{\partial T}{\partial t} = \frac{\lambda}{\rho c_p} \frac{\partial^2 T}{\partial x^2} + \frac{\dot{q}}{\rho c_p} \, , \quad \text{où}$$

$T$ représente le profil de température dans l'épaisseur de la bande de roulement [°K] ;
$\lambda$ est la conductivité thermique de la gomme [W/m/°K] ;
$\rho$ est la masse volumique [kg/m$^3$] ;
$c_p$ est la chaleur massique de la gomme [J/kg/°K] ;
$\dot{q}$ est le terme de production de chaleur due aux pertes dans la gomme en [W/m$^3$] ;
$x$ représente la direction radiale (i.e. dans l'épaisseur de la bande de roulement);

Effusivité :

$$e = \sqrt{\lambda \rho c_p}$$

Diffusivité :

$$a = \frac{\lambda}{\rho c_p} = \frac{\lambda^2}{e^2} \quad [\text{m}^2/\text{s}]$$

Les conditions aux limites sont cependant différentes selon qu'on considère la surface extérieure du pneu ou l'interface entre la bande de roulement et les nappes du sommet du pneu.

Dans le premier cas, la surface du pneu voit ses conditions aux limites changer sur un tour de roue : hors de l'aire de contact, il existe un flux de surface due à la convection avec l'air environnant; dans l'aire de contact, il y a un flux de surface lié à la conduction avec le sol et au frottement entre la gomme et le sol. A l'interface gomme/(sol+air), la condition aux limites de flux imposé à la surface du pneu peut s'écrire d'une manière formelle comme suit :

$$-\lambda \frac{\partial T}{\partial x} = \varphi \quad [\mathrm{W/m^2}]$$

où $\varphi$ est un flux de surface qui reste à expliciter.

Les échanges par rayonnement thermique peuvent être négligés.

En revanche, au niveau de l'interface entre la bande de roulement et les nappes du sommet du pneu, l'hypothèse d'un flux nul peut être faite (condition adiabatique).

Le calcul du terme $\dot{q}$ [W/m3] de production de chaleur due aux pertes dans la gomme peut être réalisé de la façon suivante.

Lorsque la gomme passe dans l'aire de contact, elle subit des déformations par compression et cisaillement qui sont source de chaleur. La puissance interne dissipée dans la gomme sur un tour de roue est calculée comme le produit, par la fonction pertes P, de l'énergie fournie lors du passage dans l'aire de contact Wf et de la fréquence de tour de roue :

$$\dot{q} = P W_f f$$

La densité d'énergie de déformation élastique subie par la gomme dans l'aire de contact est explicitée en fonction des efforts longitudinaux, transversaux et de la charge du pneu, ce qui permet d'obtenir la formulation finale :

$$\dot{q} = P(W_f, T) \frac{1}{2G^*} \frac{V}{2\pi R_0} \frac{F_X{}^2 + F_Y{}^2 + F_Z{}^2/3}{S_{ADC}{}^2}$$

où $P(W_f, T)$ est la fonction pertes, qui prend en compte le point de fonctionnement de la gomme en température et en amplitude de sollicitation et qui peut être caractérisée par expérimentation spécifique.

La température T correspond à la température caractéristique du mélange et détermine entre autres le niveau de pertes et de module. Sachant que les lois pertes et module sont par exemple mesurées à une fréquence de 10Hz, la température T est en fait une température équivalente au sens de la loi WLF, afin d'avoir une estimation des pertes et module pour des fréquences de sollicitation différentes :

$$T = T_i + C_2 \log_{10}(f/10)/\left[C_1 - \log_{10}(f/10)\right],$$

où $T_i$ est la température interne du mélange issue du calcul thermique global, et où $f = V/(2\pi R_0)$ est la fréquence de rotation.

Comme le comprendra aisément l'homme du métier à la lecture de la présente description, la même relation est utilisée pour relier le module de cisaillement de la gomme à la température interne Ti, ceci afin de prendre en compte les mécanismes de rigidification du mélange lorsque la fréquence du tour de roue augmente.

Pour le calcul du flux de conduction avec le sol, la bande de roulement et le sol peuvent être assimilés à deux murs semi-infinis mis en contact pendant l'intervalle de temps $t_{adc}$. En supposant le contact parfait, le flux de conduction s'écrit :

$$\varphi_{cond} = -2 \frac{e_g e_{sol}}{e_g + e_{sol}} \frac{1}{\sqrt{t_{adc}\pi}} (Ts - T_{sol})$$

où Ts est la température de surface de la gomme.

Le calcul du flux de convection avec l'air est rendu plus difficile par le fait que l'échange thermique avec l'air dépend fortement de la nature de l'écoulement d'air autour du pneu. D'une manière générale, la modélisation des échanges convectifs est basée sur des formulations semi-empiriques. Dans le cas particulier du pneumatique, la formule suivante peut être utilisée :

$$\varphi_{conv} = C_{air} \, 4.126 (2R_0)^{-0.2} V^{0.805} (Ts - T_{air})$$

où $C_{air}$ est une constante qui prend en compte l'effet de la convection forcée.

Le calcul du flux de frottement doit rendre compte du fait que le frottement constitué par le glissement de la gomme sur le sol est source de production de chaleur. En toute rigueur, la dissipation d'énergie se fait dans le massif de gomme sur des épaisseurs inférieures au millimètre. Dans le cas d'un contact sec, l'approximation peut être faite que l'énergie est dissipée en extrême surface et qu'elle est modélisée par un flux de frottement. Le flux de frottement moyen dans la zone de glissement de l'aire de contact s'écrit comme suit :

$$\varphi_{frot} = \alpha \frac{V_g F_\mu}{(1 - ppa)LxLy\,ent}$$

où $\alpha$ est un coefficient de partage de flux entre la gomme et le sol; une valeur $\alpha$=1 signifie que la totalité du flux de frottement est orienté vers la gomme; une valeur $\alpha$=0 signifie que la totalité du flux de frottement est orienté vers le sol; $F_\mu$ est la composante de l'effort induit par le frottement entre la gomme et le sol; $Vg$ est la vitesse de glissement; et $ppa$ est la proportion de points adhérents dans l'aire de contact.

Le flux thermique moyen à la surface de la bande de roulement est défini comme la moyenne des différents flux, pondérée par la durée caractéristique pendant laquelle ces flux sont effectifs lors d'un tour de roue, ce que traduit la relation :

$$\varphi = \frac{\varphi_{frot}(1 - ppa)t_{adc} + \varphi_{cond}t_{adc} + \varphi_{conv}t_{Hadc}}{t_{adc} + t_{Hadc}}$$

où $t_{adc}$ correspond à la durée de passage d'un élément de la bande de roulement dans l'aire de contact; où $t_{Hadc}$ est la durée de passage d'un élément de la bande de roulement hors de l'aire de contact; et où $(1-ppa)t_{adc}$ est la durée pendant laquelle un élément de la bande de roulement glisse dans l'aire de contact.

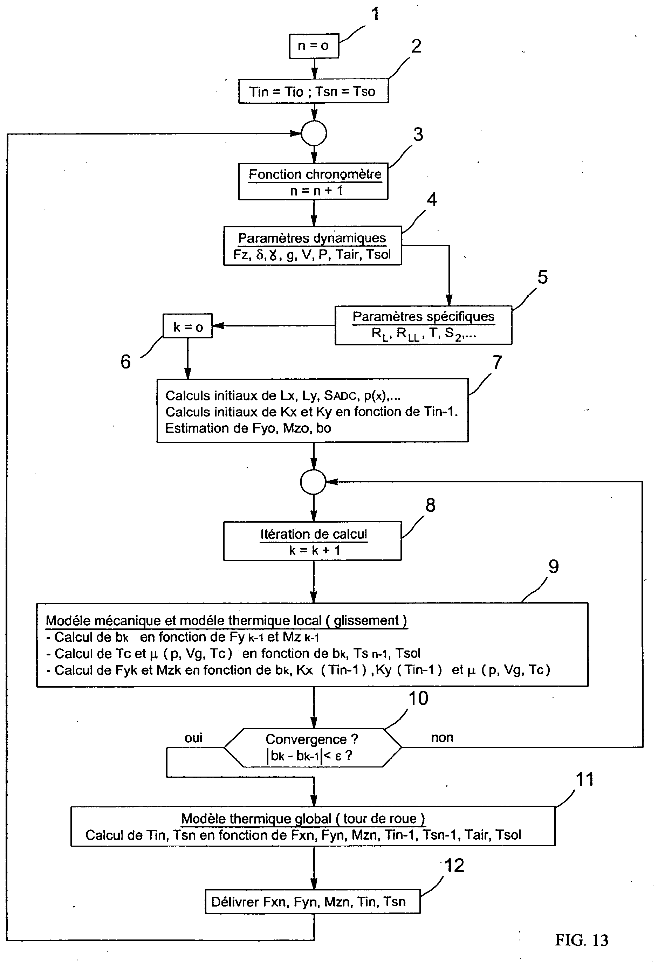

La figure 13 illustre de façon globale la mise en oeuvre opérationnelle d'un procédé conforme au mode de réalisation le plus complet de l'invention.

En amont de sa mise en oeuvre opérationnelle, ce procédé comprend une phase préliminaire au cours de laquelle sont établis le modèle mécanique ou premier modèle, le modèle thermique local ou deuxième modèle, et le modèle thermique global tour de roue, ou troisième modèle.

Chaque modèle est établi par application de lois physiques connues et / ou construites par expérimentation spécifique, et prend la forme d'un système d'équations telles que celles présentées ci-dessus pour chaque modèle.

Pour rappel, le modèle mécanique fournit les expressions des efforts longitudinaux et des efforts transversaux qui sont transmis par le pneu entre le sol et le véhicule, du couple d'auto-alignement qui est lié à l'intensité de ces efforts et à leur distribution dans l'aire de contact, et de l'équilibre des forces élémentaires de cisaillement et de glissement du pneu au point N supposé unique de passage entre les zones de contact adhérent et glissant, ces expressions étant données en fonction des paramètres dynamiques qui sont liés aux conditions physiques de roulement et d'utilisation du pneu, des paramètres physiques spécifiques du pneu, et de l'abscisse b du point de passage.

Le modèle thermique local fournit l'expression des variations de la température de contact de la bande de roulement avec le sol depuis l'entrée jusqu'à la sortie de l'aire de contact, ces variations dépendant notamment de la température périphérique de la bande de roulement, de la température du sol, et du glissement de la bande de roulement sur le sol.

Le modèle thermique global fournit le profil de température dans l'épaisseur de la bande de roulement et les variations, sur une période de tour de roue, de la température périphérique de la bande de roulement et de la température interne du pneu, en fonction notamment des valeurs antérieurement connues ou estimées des températures périphérique et interne, du coefficient de conduction thermique de la bande de roulement, et de phénomènes à composante thermodynamique tels que les déformations internes subies par le pneu, les échanges thermiques entre le pneu et son environnement, et le glissement de la bande de roulement sur le sol.

La phase d'exploitation du procédé, qui s'appuie sur les résultats de la phase préliminaire et qui est illustrée à la figure 13, comprend d'abord une opération 1 consistant à initialiser un indice compteur n utilisé pour la mesure du temps.

A l'opération 2, des valeurs initiales Tso et Tio sont attribuées à la température périphérique de la bande de roulement et à la température interne du pneu, par exemple en faisant l'hypothèse que le pneu est initialement en équilibre thermique avec l'air ambiant.

L'opération 3 incrémente le temps compté par le chronomètre d'un intervalle de temps correspondant au moins à celui qui est nécessaire pour la réalisation des calculs ultérieurs tels que décrits ci-après.

Des valeurs préalablement mesurées ou mémorisées sont ensuite attribuées aux paramètres dynamiques (opération 4) et aux paramètres spécifiques (opération 5).

L'opération 6 consiste à initialiser un indice compteur k utilisé pour compter le nombre de cycles de calcul successifs effectués à l'intérieur d'une boucle d'itération qui sera décrite ci-après.

L'opération 7 constitue une phase préparatoire destinée notamment à permettre le calcul de grandeurs contingentes dont la valeur peut être considérée comme constante pour les différents cycles de calcul d'une même boucle d'itération, ce qui permet d'éviter l'exécution répétée de ces calculs à chaque cycle de calcul d'une même boucle d'itération.

En particulier, la phase préparatoire 7 est utilisée pour calculer les dimensions Lx et Ly de l'aire de contact, sa surface $S_{ADC}$, le profil de pression p(x) le long de l'aire de contact, de même que les rigidités Kx et Ky de la bande de roulement en fonction de la température interne Ti à l'instant antérieur n-1, c'est-à-dire Tin-1.

Des valeurs estimées Fyo, Mzo et bo sont par ailleurs attribuées aux efforts latéraux Fy, au couple d'auto-alignement Mz, et à l'abscisse b du point N de passage entre la zone de contact adhérent et la zone de contact glissant.

Lorsque les paramètres d'entrée varient peu en fonction du temps, les valeurs estimées Fyo, Mzo et bo peuvent être constituées par les valeurs calculées à l'instant précédent.

Dans le cas contraire, l'abscisse bo de début de glissement est déterminée en supposant que le profil de pression dans la longueur de l'aire de contact est parabolique et en négligeant la rigidité de torsion et la rigidité du sommet.

Dans ce cas, l'équation de glissement (équation 3) a une solution analytique :

$$b_0 = a\left(\frac{4}{3}\frac{a^2}{\mu_0 F_Z / Ly}\sqrt{\left[K_X\frac{\tau}{1+\tau}\right]^2 + \left[K_Y(\delta+\alpha_1)\right]^2} - 1\right)$$

Connaissant $b_0$, l'effort $F_{y0}$ et le couple $M_{Z0}$ sont alors calculés à partir des équations 5 à 7.

Il faut en outre vérifier que la position initiale obtenue pour le point de passage satisfait la contrainte sur le signe du cisaillement latéral de la bande de roulement, à savoir $(Y_K-Y_N)\delta>0$. Si tel n'est pas le cas, la solution envisagée n'a pas de sens physique. Il faut alors imposer : $Y_K-Y_N=0$, et la valeur initiale $M_{Z0}$ du couple d'auto-alignement est fixée à 0.

L'opération 8 incrémente l'indice compteur k et permet d'aborder un premier ou un nouveau cycle de calcul (étapes 9 et 10) de la phase itérative.

Cette phase itérative permet de résoudre par approximations successives, et à partir des valeurs antérieurement connues ou estimées de l'abscisse b du point de passage, des efforts transversaux Fy, et du couple d'auto-alignement Mz, de nouvelles valeurs de ces grandeurs b, Fy et Mz qui résolvent les équations 1 à 7 précédemment présentées, pour les valeurs attribuées aux paramètres dynamiques et aux paramètres spécifiques.

Ces équations sont formulées en faisant apparaître l'abscisse b du point de passage entre la zone de contact adhérent et la zone de contact glissant, les efforts dans l'aire de contact étant décomposés en deux contributions, à savoir un effort de cisaillement qui dépend des rigidités de la gomme, du sommet et de la carcasse du pneu, et un effort de frottement qui dépend de la loi de frottement ($\mu$).

L'abscisse b est calculée à partir des équations 1 à 3 et des valeurs de Fy et Mz estimées à l'itération précédente. Il s'agit d'une équation scalaire, dont la solution est bornée (- a ≤ b ≤ a). Le calcul de l'abscisse $b$ est par exemple réalisé par combinaison d'une bissection et d'une sécante.

Si le déplacement proposé par la méthode sécante sort des bornes inférieures et extérieures, le procédé bascule sur un pas de bissection.

Plusieurs solutions de l'abscisse b étant a priori possibles, la solution retenue est celle qui satisfait la condition $(Y_K-Y_N)\delta>0$.

Les intégrales $\displaystyle\int_{-a}^{b}\mu(P(x),T,Vg)P(x)\,dx$ et $\displaystyle\int_{-a}^{b}\mu(P(x),T,Vg)P(x)x\,dx$ liées au frottement sur le sol de la gomme de la bande de roulement sont par exemple calculées en utilisant les formules de quadrature de Gauss.

Pour le calcul des résidus du système constitué par les équations 4, 5, et 6+7, et le calcul de la convergence, il s'agit de résoudre le système non linéaire de $n$ équations en $n$ inconnues noté de manière formelle : $F(x)=0$.

Bien que plusieurs procédés itératifs soient possibles, le procédé optimal semble être constitué par le procédé itératif mixte Newton-Raphson/Broyden.

Le procédé de Newton-Raphson est basé sur l'approximation locale de $F$ par un modèle linéaire tangent. Cette approximation conduit à une méthode itérative de la forme :

$$x_{k+1} = x_k - J(x_k)^{-1} F(x_k), \quad \text{où} \quad J(x_k) = \frac{\partial F(x_k)}{\partial x}.$$

Pour réduire le coût par itération du procédé de Newton-Raphson, on peut utiliser le procédé de Broyden. Dans ce procédé, on considère une approximation sécante de F entre deux valeurs successives d'itération $x_{k-1}$ et $x_k$, et on évite ainsi le calcul de la jacobienne J.

Une itération de Broyden a la forme : $x_{k+1}=x_k-B_k^{-1}F(x_k)$.

La différence avec le procédé de Newton se situe au niveau de la matrice B, qui est une approximation de la jacobienne J. Le procédé de Broyden classique met à jour la matrice B à chaque itération en utilisant :

$$B_{k+1} = B_k + \frac{(y_k - B_k s_k)s_k^T}{s_k^T s_k}.$$

Les vecteurs s et y sont définis par $s_k=x_{k+1}-x_k$ et $y_k=F(x_{k+1})-F(x_k)$.

Ce procédé a une convergence super linéaire si le point initial est suffisamment proche de la solution. Il est nécessaire de disposer d'une estimation initiale de B, le meilleur choix étant $B_0 = J_0$.

En pratique, il est souhaitable de procéder aux premières itérations avec le procédé Newton-Raphson, et, quand la convergence est jugée suffisante, de basculer sur le procédé Broyden.

Un critère de passage du procédé Newton-Raphson au procédé Broyden est donné par :

$$\|F(x_{k+1})\| \le \eta \|F(x_k)\|,$$

où $\eta>0$ est un paramètre de faible valeur.

S'il s'avère que b = a, l'équation de glissement a une solution triviale, qu'il est généralement souhaitable d'éviter. Pour ce faire, cette égalité est évitée, dans la recherche du point de glissement, en imposant par exemple bmin = 0.9995 * a.

A chaque cycle de calcul d'ordre k, l'étape 9 comprend notamment une opération consistant à calculer une nouvelle valeur provisoire $b_k$ de l'abscisse du point de passage à partir des équations 1 à 3 d'équilibre des forces élémentaires et des valeurs antérieurement connues ou estimées $F_{Yk-1}$ et $M_{Zk-1}$ des efforts transversaux et du couple d'auto-alignement.

Dans le mode de réalisation préféré, dans lequel le modèle mécanique est enrichi par le modèle thermique local et prend notamment en compte l'influence de l'évolution de la température de contact sur la valeur du coefficient de frottement de la gomme du pneu sur le sol, l'étape 9 comprend également, pour chaque point de la zone de contact glissant, le calcul de la température de contact Tc et du coefficient de frottement $\mu$ en fonction de la valeur provisoire nouvellement calculée $b_k$ de l'abscisse du point de passage, de la température périphérique $T_{sn-1}$ telle que connue à l'instant précédent, et de la température du sol $T_{sol}$, la température périphérique $T_{sn-1}$ du pneu étant utilisée pour le calcul de la température de contact en entrée de la surface de contact.

Enfin, l'étape 9 comprend l'opération qui consiste à calculer, à partir de la nouvelle valeur provisoire $b_k$ de l'abscisse du point de passage, des valeurs des rigidités Kx et Ky de la bande de roulement pour la température interne Tin-1 telle qu'elle est connue à l'instant antérieur, de la valeur du coefficient de frottement $\mu$, et des équations 1 à 7, de nouvelles valeurs $F_{Yk}$ et $M_{Zk}$ des efforts transversaux et du couple d'auto-alignement, utilisables pour un éventuel cycle de calcul ultérieur.

L'étape 10 consiste à tester la convergence de la phase itérative.

Par exemple, si les écarts respectifs entre d'une part les nouvelles valeurs $b_k$, $F_{Yk}$ et $M_{Zk}$ et d'autre part les valeurs provisoires $b_{k-1}$, $F_{Yk-1}$ et $M_{Zk-1}$ issues du cycle de calcul précédent sont inférieurs à des limites respectives telles que $\varepsilon$, alors la phase itérative est interrompue. Dans le cas contraire, cette phase itérative est poursuivie par rebouclage en amont de l'opération 8.

A l'interruption de la phase itérative, le modèle thermique global tour de roue est utilisé (étape 11) pour calculer les nouvelles valeurs à jour $T_{sn}$ et $T_{in}$ des températures périphérique et interne en tenant compte des évolutions subies par ces températures, depuis la fin de la phase itérative précédente, sous l'effet de l'ensemble des phénomènes à composante thermodynamique, tels que les déformations internes subies par le pneu, les échanges thermiques entre le pneu et son environnement (air, sol), et le glissement de la bande de roulement sur le sol.

On rappelle que la température Ts est la température de surface moyenne, à la fois dans la largeur et dans la circonférence du pneu, de la bande de roulement, et que le calcul des températures Ti et Ts s'appuie sur une modélisation unidirectionnelle dans l'épaisseur de la bande de roulement.

Les équations du modèle thermique global sont résolues par une approche classique de méthode par différences finies en utilisant un maillage spatial dans l'épaisseur de la gomme et une méthode de résolution dans le temps de type Runge-Kutta d'ordre 2.

L'opération 12, mise en oeuvre à la sortie de la phase itérative, consiste à délivrer, pour l'instant n, les valeurs des efforts longitudinaux et transversaux Fxn, Fyn, du couple d'auto-alignement Mzn, de la température interne Tin du pneu, et de la température périphérique Tsn de la bande de roulement.

Le procédé est alors rebouclé juste en amont de l'opération 3 d'incrémentation du chronomètre, et avant l'opération 4 de mise à jour des paramètres dynamiques qui permet de tenir compte des évolutions subies par ces paramètres pendant le temps d'exécution de la phase itérative qui vient de se terminer.

La nouvelle valeur Tin de la température interne du pneu sera utilisée pour l'opération 5 de mise à jour des paramètres spécifiques, ou au cours de la phase préparatoire 7, pour en déduire la nouvelle valeur de la rigidité G* du mélange constitutif de la gomme du pneu, qui conditionne les valeurs des rigidités Kx et Ky.

Par ailleurs, la nouvelle valeur Tsn de la température périphérique de la bande de roulement sera utilisée lors de l'étape 9 pour le calcul de la température de contact Tc en entrée de la bande de roulement.

On comprend donc que le couplage entre le processus de détermination des efforts et le processus de détermination des températures intervient à deux niveaux, à savoir d'une part par la prise en compte du fait que la température moyenne Ti de la bande de roulement influe sur la rigidité G* du mélange et donc sur les rigidités Kx et Ky de la bande de roulement, et d'autre part par la prise en compte du fait que la température périphérique Ts de la bande de roulement dans l'aire de contact influe sur le coefficient d'adhérence entre la gomme et le sol.

Le procédé de simulation qui vient d'être décrit est notamment applicable à la simulation en temps réel du comportement dynamique d'un véhicule doté d'un châssis et de plusieurs pneus en situation de roulement sur le sol.

Dans une telle application, chacun des modèles mécanique, thermique local et thermique global, ou au moins le premier d'entre eux, est exploité pour chaque pneu et associé à un modèle dynamique de châssis.

Chacun des modèles de pneu coopère avec ce modèle de châssis d'une part pour recevoir du modèle de châssis les valeurs des paramètres dynamiques ou de certains d'entre eux au moins, et d'autre part pour permettre au modèle de châssis d'exploiter, pour chaque pneu, les valeurs des efforts longitudinaux, des efforts transversaux, et du couple d'auto-alignement obtenues par la mise en oeuvre des modèles de pneu.

## Revendications

**1.** Procédé de simulation du comportement physique d'un pneu lorsque, équipant un véhicule, il est en situation de roulement sur le sol, la bande de roulement du pneu présentant une aire de contact avec le sol incluant une zone de contact adhérent et une zone de contact glissant, ce procédé comprenant au moins les opérations consistant à calculer des efforts longitudinaux (Fx) et des efforts transversaux (Fy), transmis par le pneu entre le sol et le véhicule, en fonction de paramètres dynamiques liés aux conditions physiques de roulement et d'utilisation du pneu et en fonction de paramètres physiques spécifiques du pneu, ce procédé étant **caractérisé en ce qu'**il comprend les opérations consistant à :

- établir, au cours d'une phase préliminaire, par application de lois physiques connues et / ou construites par expérimentation spécifique, et en tant que premier modèle, un modèle des efforts longitudinaux (Fx), des efforts transversaux (Fy), d'un couple d'auto-alignement (Mz) lié à l'intensité de ces efforts et à leur distribution dans l'aire de contact, et d'un équilibre des forces élémentaires de cisaillement et de glissement du pneu en un point (b) supposé unique de passage entre les zones de contact adhérent et glissant, ce premier modèle prenant la forme d'un système d'équations respectives exprimées en fonction des paramètres dynamiques, des paramètres spécifiques, et de l'abscisse (b) du point de passage;

- attribuer (4), en vue d'une application numérique, des valeurs aux paramètres dynamiques et aux paramètres spécifiques (5); et

- résoudre par approximations successives, au cours d'une phase itérative d'application numérique (8-10) constituée d'une succession de cycles de calcul, et au moins à partir de valeurs antérieurement connues ou estimées de l'abscisse (bo) du point de passage, des efforts transversaux (Fyo), et du couple d'auto-alignement (Mzo), de nouvelles valeurs de l'abscisse (b) du point de passage, des efforts transversaux (Fy), et du couple d'auto-alignement (Mz) qui résolvent le système d'équations du premier modèle pour les valeurs attribuées aux paramètres dynamiques et aux paramètres spécifiques,

**caractérisé en ce qu'**il comprend en outre les opérations consistant à :

- prendre en compte, dans le premier modèle établi au cours de la phase préliminaire, l'influence de la température sur les valeurs de certains au moins des paramètres spécifiques;
- établir, au cours de cette phase préliminaire, par application de lois physiques connues et / ou construites par expérimentation spécifique, et en tant que second modèle, un modèle local d'échauffement exprimant des variations d'une température de contact de la bande de roulement avec le sol depuis l'entrée jusqu'à la sortie de l'aire de contact par contact de la bande de roulement avec le sol et glissement;
- établir, au cours de cette phase préliminaire, par application de lois physiques connues et / ou construites par expérimentation spécifique, et en tant que troisième modèle, un modèle global d'échauffement et de flux thermique, ce troisième modèle prenant la forme d'un système d'équations exprimant des variations sur une période de tour de roue d'une température périphérique de la bande de roulement et d'une température interne du pneu en fonction de valeurs antérieurement connues ou estimées des températures périphérique et interne, d'un coefficient de conduction thermique de la bande de roulement, et de phénomènes à composante thermodynamique tels que déformations internes subies par le pneu, échanges thermiques entre le pneu et son environnement, et glissement de la bande de roulement sur le sol;
- accepter (4), en tant que paramètres dynamiques supplémentaires, la température du sol, la température de l'air, et la température initiale du pneu;
- calculer, à chaque cycle de calcul de chaque phase itérative (8-10), les nouvelles valeurs de l'abscisse du point de passage, des efforts transversaux et du couple d'auto-alignement en utilisant le premier modèle enrichi de l'influence de la températures, en utilisant le premier et le second modèle; et
- à l'interruption de chaque phase itérative, mettre à jour (11) les valeurs des températures périphérique et interne pour tenir compte des évolutions subies par ces températures depuis la fin de la phase itérative précédente.

2. Procédé de simulation suivant la revendication 1, **caractérisé en ce qu'**il comprend en outre une opération mise à jour après la fin de la phase itérative et consistant à mettre au moins à jour (4) les paramètres dynamiques pour tenir compte des évolutions subies par ces paramètres pendant le temps d'exécution de la phase itérative, et à engager une nouvelle phase itérative (8-10) .

3. Procédé de simulation suivant la revendication 1 ou 2, **caractérisé en ce que** chaque nouveau cycle de calcul de chaque phase itérative comprend les opérations (9) consistant au moins à :

- calculer une nouvelle valeur provisoire de l'abscisse du point de passage à partir des équations d'équilibre des forces élémentaires et des valeurs antérieurement connues ou estimées des efforts transversaux et du couple d'auto-alignement;
- calculer, à partir de la nouvelle valeur provisoire de l'abscisse du point de passage et des équations liant les efforts transversaux et le couple d'auto-alignement aux paramètres dynamiques, aux paramètres spécifiques, et à l'abscisse du point de passage, de nouvelles valeurs des efforts transversaux et du couple d'auto-alignement utilisables pour un éventuel cycle de calcul ultérieur;
- interrompre conditionnellement (10) ladite phase itérative au moins lorsque l'écart entre la nouvelle valeur provisoire de l'abscisse du point de passage et la valeur antérieurement connue ou estimée de cette abscisse est inférieur à une limite de précision prédéterminée; et
- à l'interruption de ladite phase itérative, affecter (12) aux efforts transversaux et au couple d'auto-alignement, en tant que valeurs pour cette phase, les nouvelles valeurs des efforts transversaux et du couple d'auto-alignement obtenues au dernier cycle de calcul.

4. Procédé de simulation suivant la revendication 1, **caractérisé en ce que** le premier modèle est enrichi au moins en prenant en compte l'influence de l'évolution de la température de contact (Tc) sur la valeur du coefficient de frottement ($\mu$) de la gomme du pneu sur le sol.

5. Procédé de simulation suivant la revendication 1 ou 4, **caractérisé en ce que** le premier modèle est enrichi au moins en prenant en compte l'influence de la température interne (Ti) du pneu sur la valeur du module de cisaillement (G*) du mélange caoutchoutique de la bande de roulement du pneu.

6. Procédé de simulation suivant l'une quelconque des revendications 1 à 5, **caractérisé en ce que** le second modèle de calcul utilise la température périphérique (Ts) du pneu pour le calcul de la température de contact (Tc) en entrée de la surface de contact.

7. Procédé de simulation suivant l'une quelconque des revendications précédentes, **caractérisé en ce que** chaque phase itérative est précédée d'une phase préparatoire (7) au cours de laquelle sont calculées des grandeurs contingentes, incluant les dimensions de l'aire de contact, au moyen d'un sous-ensemble desdites équations et en fonction des valeurs attribuées aux paramètres dynamiques et aux paramètres spécifiques, chaque grandeur contingente étant exploitée dans ladite phase itérative avec une valeur qui lui a été attribuée lors de la phase préparatoire.

**8.** Application du procédé suivant l'une quelconque des revendications précédentes à la simulation en temps réel du comportement dynamique d'un véhicule doté d'un châssis et de plusieurs pneus en situation de roulement sur le sol, application dans laquelle le premier modèle au moins est exploité pour chaque pneu et associé à un modèle donné de dynamique de châssis, dans laquelle le modèle de châssis fournit au moins audit premier modèle, pour chaque pneu, les valeurs de certains au moins des paramètres dynamiques, et dans laquelle le modèle de châssis exploite, pour chaque pneu, les valeurs des efforts longitudinaux, des efforts transversaux, et du couple d'auto-alignement obtenues par la mise en oeuvre du premier modèle au moins.

**9.** Application selon la revendication 9 du procédé suivant l'une quelconque des revendications 1 à 7 à la simulation en temps réel du comportement dynamique d'un véhicule doté d'un châssis et de plusieurs pneus en situation de roulement sur le sol, application dans laquelle chacun des premiers, deuxième et troisième modèles est exploité pour chaque pneu et associé à un modèle donné de dynamique de châssis, dans laquelle le modèle de châssis fournit auxdits modèles, pour chaque pneu, les valeurs de certains au moins des paramètres dynamiques, et dans laquelle le modèle de châssis exploite, pour chaque pneu, les valeurs des efforts longitudinaux, des efforts transversaux, et du couple d'auto-alignement obtenues par la mise en oeuvre desdits premiers, deuxième et troisième modèles.

## Patentansprüche

**1.** Verfahren zur Simulation des physikalischen Verhaltens eines Reifens, wenn er an einem Fahrzeug angebracht ist und sich in der Situation des Rollens auf dem Boden befindet, wobei der Laufstreifen des Reifens eine Kontaktfläche mit dem Boden aufweist, die einen Bereich des Haftkontakts und einen Bereich des Gleitkontakts enthält, wobei dieses Verfahren wenigstens die Arbeitsschritte umfasst, die darin bestehen, Längskräfte (Fx) und Querkräfte (Fy), die durch den Reifen zwischen dem Boden und dem Fahrzeug übertragen werden, in Abhängigkeit von dynamischen Parametern, die mit den physikalischen Bedingungen des Rollens und der Verwendung des Reifens zusammenhängen, und in Abhängigkeit von spezifischen physikalischen Parametern des Reifens zu berechnen, wobei dieses Verfahren **dadurch gekennzeichnet ist, dass** es die folgenden Arbeitsschritte umfasst:

- Erstellen, während einer Vorbereitungsphase, durch Anwendung von bekannten und/oder aus spezifischen Versuchen abgeleiteten physikalischen Gesetzen, und als erstes Modell, eines Modells der Längskräfte (Fx), der Querkräfte (Fy), eines Selbstausrichtungsmoments (Mz), das mit der Stärke dieser Kräfte und mit ihrer Verteilung in der Kontaktfläche zusammenhängt, und eines Gleichgewichts der elementaren Scher- und Gleitkräfte des Reifens in einem als einzig angenommenen Punkt (b) des Übergangs zwischen den Bereichen des Haft- und des Gleitkontakts, wobei dieses erste Modell die Form eines Systems von jeweiligen Gleichungen annimmt, die in Abhängigkeit von den dynamischen Parametern, den spezifischen Parametern und der Abszisse (b) des Übergangspunktes ausgedrückt werden;
- Zuweisen (4), zwecks einer numerischen Auswertung, der Werte zu den dynamischen Parametern und zu den spezifischen Parametern (5); und
- Bestimmen, durch sukzessive Approximationen während einer iterativen Phase der numerischen Auswertung (8-10), die aus einer Abfolge von Berechnungszyklen besteht, und wenigstens ausgehend von zuvor bekannten oder geschätzten Werten der Abszisse (bo) des Übergangspunktes, der Querkräfte (Fyo) und des Selbstausrichtungsmoments (Mzo), neuer Werte der Abszisse (b) des Übergangspunktes, der Querkräfte (Fy) und des Selbstausrichtungsmoments (Mz), welche das Gleichungssystem des ersten Modells für die den dynamischen Parametern und den spezifischen Parametern zugewiesenen Werte lösen,

**dadurch gekennzeichnet, dass** es außerdem die folgenden Arbeitsschritte umfasst:

- Berücksichtigen, in dem während der Vorbereitungsphase erstellten ersten Modell, des Einflusses der Temperatur auf die Werte wenigstens einiger der spezifischen Parameter;
- Erstellen, während dieser Vorbereitungsphase, durch Anwendung von bekannten und/oder aus spezifischen Versuchen abgeleiteten physikalischen Gesetzen, und als zweites Modell, eines lokalen Modells der Erwärmung, welches Änderungen einer Kontakttemperatur des Laufstreifens mit dem Boden vom Eingang bis zum Ausgang der Kontaktfläche durch Kontakt des Laufstreifens mit dem Boden und Gleiten ausdrückt;
- Erstellen, während dieser Vorbereitungsphase, durch Anwendung von bekannten und/oder aus spezifischen Versuchen abgeleiteten physikalischen Gesetzen, und als drittes Modell, eines globalen Modells der Erwärmung und des Wärmeflusses, wobei dieses dritte Modell die Form eines Systems von Gleichungen annimmt, welche Änderungen einer Umfangstemperatur des Laufstreifens und einer Innentemperatur des Reifens während einer Radumdrehungsperiode in Abhängigkeit von zuvor bekannten oder geschätzten Werten der Umfangs- und der Innentemperatur, von einem Wärmeleitkoeffizienten des Laufstreifens und von Erscheinungen mit thermodynamischer Komponente, wie vom Reifen erfahrene innere Verformungen, Wärmeaustauschvorgänge zwischen dem Reifen und seiner Umgebung und Gleiten des Laufstreifens auf dem Boden, ausdrücken;
- Aufnehmen (4), als zusätzliche dynamische Parameter, der Temperatur des Bodens, der Temperatur der Luft und der Anfangstemperatur des Reifens;
- Berechnen, in jedem Berechnungszyklus jeder iterativen Phase (8-10), der neuen Werte der Abszisse des Übergangspunktes, der Querkräfte und des Selbstausrichtungsmoments unter Verwendung des ersten Modells, das um den Einfluss der Temperaturen erweitert wurde, unter Verwendung des ersten und des zweiten Modells; und
- bei Abbruch jeder iterativen Phase, Aktualisieren (11) der Werte der Umfangs- und der Innentemperatur, um Änderungen zu berücksichtigen, die diese Temperaturen seit dem Ende der vorhergehenden iterativen Phase erfahren haben.

2. Verfahren zur Simulation nach Anspruch 1, **dadurch gekennzeichnet, dass** es außerdem einen Arbeitsschritt umfasst, der nach dem Ende der iterativen Phase aktualisiert wird und darin besteht, wenigstens die dynamischen Parameter zu aktualisieren (4), um Änderungen zu berücksichtigen, die diese Parameter während der Dauer der Ausführung der iterativen Phase erfahren haben, und eine neue iterative Phase (8-10) einzuleiten.

3. Verfahren zur Simulation nach Anspruch 1 oder 2, **dadurch gekennzeichnet, dass** jeder neue Berechnungszyklus jeder iterativen Phase wenigstens die folgenden Arbeitsschritte (9) umfasst:

- Berechnen eines neuen vorläufigen Wertes der Abszisse des Übergangspunktes aus den Gleichungen des Gleichgewichts der elementaren Kräfte und den zuvor bekannten oder geschätzten Werten der Querkräfte und des Selbstausrichtungsmoments;
- Berechnen, aus dem neuen vorläufigen Wert der Abszisse des Übergangspunktes und den Gleichungen, welche die Querkräfte und das Selbstausrichtungsmoment mit den dynamischen Parametern, mit den spezifischen Parametern und mit der Abszisse des Übergangspunktes verknüpfen, neuer Werte der Querkräfte und des Selbstausrichtungsmoments, die für einen eventuellen weiteren Berechnungszyklus verwendbar sind;
- bedingtes Abbrechen (10) der iterativen Phase wenigstens dann, wenn die Abweichung zwischen dem neuen vorläufigen Wert der Abszisse des Übergangspunktes und dem zuvor bekannten oder geschätzten Wert dieser Abszisse kleiner als ein vorbestimmter Genauigkeitsgrenzwert ist; und
- beim Abbruch der iterativen Phase, Zuweisen (12) der neuen Werte der Querkräfte und des Selbstausrichtungsmoments, die im letzten Berechnungszyklus erhalten wurden, zu den Querkräften und zu dem Selbstausrichtungsmoment als Werte für diese Phase.

4. Verfahren zur Simulation nach Anspruch 1, **dadurch gekennzeichnet, dass** das erste Modell wenigstens unter Berücksichtigung des Einflusses der Änderung der Kontakttemperatur (Tc) auf den Wert des Reibungskoeffizienten ($\mu$) des Gummis des Reifens auf dem Boden erweitert ist.

5. Verfahren zur Simulation nach Anspruch 1 oder 4, **dadurch gekennzeichnet, dass** das erste Modell wenigstens unter Berücksichtigung des Einflusses der Innentemperatur (Ti) des Reifens auf den Wert des Schermoduls (G*) der Kautschukmischung des Laufstreifens des Reifens erweitert ist.

6. Verfahren zur Simulation nach einem der Ansprüche 1 bis 5, **dadurch gekennzeichnet, dass** das zweite Berechnungsmodell die Umfangstemperatur (Ts) des Reifens für die Berechnung der Kontakttemperatur (Tc) am Eingang der Kontaktfläche verwendet.

7. Verfahren zur Simulation nach einem der vorhergehenden Ansprüche, **dadurch gekennzeichnet, dass** jeder iterativen Phase eine Vorbereitungsphase (7) vorausgeht, während welcher kontingente Größen, darunter die Abmessungen der Kontaktfläche, mittels einer Untermenge der Gleichungen und in Abhängigkeit von den Werten, die den dynamischen Parametern und den spezifischen Parametern zugewiesen wurden, berechnet werden, wobei jede kontingente Größe in der iterativen Phase mit einem Wert verwendet wird, welcher ihr während der Vorbereitungsphase zugewiesen worden ist.

8. Anwendung des Verfahrens nach einem der vorhergehenden Ansprüche auf die Simulation des dynamischen Verhaltens eines Fahrzeugs, das mit einem Fahrgestell und mit mehreren Reifen ausgestattet ist, in Echtzeit in der Situation des Rollens auf dem Boden, wobei bei dieser Anwendung wenigstens das erste Modell für jeden Reifen ausgewertet wird und mit einem gegebenen Dynamikmodell des Fahrgestells verknüpft wird, wobei das Fahrgestellmodell wenigstens dem ersten Modell für jeden Reifen die Werte wenigstens einiger der dynamischen Parameter liefert, und wobei das Fahrgestellmodell für jeden Reifen die Werte der Längskräfte, der Querkräfte und des Selbstausrichtungsmoments verwendet, die durch den Einsatz wenigstens des ersten Modells erhalten wurden.

9. Anwendung nach Anspruch 9 des Verfahrens nach einem der Ansprüche 1 bis 7 auf die Simulation des dynamischen Verhaltens eines Fahrzeugs, das mit einem Fahrgestell und mit mehreren Reifen ausgestattet ist, in Echtzeit in der Situation des Rollens auf dem Boden, wobei bei dieser Anwendung das erste, das zweite und das dritte Modell jeweils für jeden Reifen ausgewertet werden und mit einem gegebenen Dynamikmodell des Fahrgestells verknüpft werden, wobei das Fahrgestellmodell diesen Modellen für jeden Reifen die Werte wenigstens einiger der dynamischen Parameter liefert, und wobei das Fahrgestellmodell für jeden Reifen die Werte der Längskräfte, der Querkräfte und des Selbstausrichtungsmoments verwendet, die durch den Einsatz des ersten, des zweiten und des dritten Modells erhalten wurden.

**Claims**

1. Method of simulation of the physical behaviour of a tyre when, fitted to a vehicle, it is in a situation of rolling on the ground, the tread of the tyre exhibiting an area of contact with the ground including a zone of gripping contact and a zone of slipping contact, this method comprising at least the operations consisting in calculating longitudinal loads (Fx) and transverse loads (Fy), transmitted by the tyre between the ground and the vehicle, as a function of dynamic parameters related to the physical conditions of rolling and of use of the tyre and as a function of specific physical parameters of the tyre, this method being **characterized in that** it comprises the operations consisting in:

   - establishing, in the course of a preliminary phase, by applying physical laws which are known and/or constructed by specific experimentation, and as first model, a model of the longitudinal loads (Fx), of the transverse loads (Fy), of a self-alignment torque (Mz) related to the intensity of these loads and to their distribution in the contact area, and of an equilibrium of the elementary forces of shearing and of slippage of the tyre at a point (b) assumed unique of switching between the zones of gripping and sliding contact, this first model taking the form of a system of respective equations expressed as a function of the dynamic parameters, of the specific parameters, and of the abscissa (b) of the switching point;
   - allocating (4), with a view to a numerical application, values to the dynamic parameters and to the specific parameters (5); and
   - solving by successive approximations, in the course of an iterative phase of numerical application (8-10) consisting of a succession of calculation cycles, and at least on the basis of previously known or estimated values of the abscissa (bo) of the switching point, of the transverse loads (Fyo), and of the self-alignment torque (Mzo), new values of the abscissa (b) of the switching point, of the transverse loads (Fy), and of the self-alignment torque (Mz) which solve the system of equations of the first model for the values allocated to the dynamic parameters and to the specific parameters,

   **characterized in that** it furthermore comprises the operations consisting in:

   - taking into account, in the first model established in the course of the preliminary phase, the influence of the temperature on the values of some at least of the specific parameters;
   - establishing, in the course of this preliminary phase, by applying physical laws which are known and/or constructed by specific experimentation, and as second model, a local model of heating expressing variations of a temperature of contact of the tread with the ground from entry to exit of the contact area by contact of the tread with the ground and slippage;
   - establishing, in the course of this preliminary phase, by applying physical laws which are known and/or constructed by specific experimentation, and as third model, a global model of heating and of heat flux, this third model taking the form of a system of equations expressing variations over a wheel revolution period of a peripheral temperature of the tread and of an internal temperature of the tyre as a function of previously known or estimated values of the peripheral and internal temperatures, of a coefficient of thermal conduction of the tread, and of phenomena with thermodynamic component such as internal deformations undergone by the tyre, thermal exchanges between the tyre and its environment, and slippage of the tread on the ground;

- accepting (4), as additional dynamic parameters, the temperature of the ground, the temperature of the air, and the initial temperature of the tyre;

- calculating, in each calculation cycle of each iterative phase (8-10), the new values of the abscissa of the switching point, of the transverse loads and of the self-alignment torque by using the first model enriched with the influence of the temperatures, using the first and the second model; and

- upon the interruption of each iterative phase, updating (11) the values of the peripheral and internal temperatures to take account of the alterations undergone by these temperatures since the end of the previous iterative phase.

2. Method of simulation in accordance with Claim 1, **characterized in that** it furthermore comprises an operation updated after the end of the iterative phase and consisting in at least updating (4) the dynamic parameters to take account of the alterations undergone by these parameters during the execution time of the iterative phase, and in commencing a new iterative phase (8-10).

3. Method of simulation in accordance with Claim 1 or 2, **characterized in that** each new calculation cycle of each iterative phase comprises the operations (9) consisting at least in:

- calculating a new provisional value of the abscissa of the switching point on the basis of the equilibrium equations for the elementary forces and of the previously known or estimated values of the transverse loads and of the self-alignment torque;

- calculating, on the basis of the new provisional value of the abscissa of the switching point and of the equations relating the transverse loads and the self-alignment torque to the dynamic parameters, to the specific parameters, and to the abscissa of the switching point, new values of the transverse loads and of the self-alignment torque that can be used for a possible subsequent calculation cycle;

- conditionally interrupting (10) the said iterative phase at least when the deviation between the new provisional value of the abscissa of the switching point and the previously known or estimated value of this abscissa is less than a predetermined precision limit; and

- upon the interruption of the said iterative phase, assigning (12) to the transverse loads and to the self-alignment torque, as values for this phase, the new values of the transverse loads and of the self-alignment torque that were obtained in the last calculation cycle.

4. Method of simulation in accordance with Claim 1, **characterized in that** the first model is enriched at least by taking into account the influence of the alteration of the contact temperature ($T_c$) on the value of the coefficient of friction ($\mu$) of the rubber of the tyre on the ground.

5. Method of simulation in accordance with Claim 1 or 4, **characterized in that** the first model is enriched at least by taking into account the influence of the internal temperature ($T_i$) of the tyre on the value of the shear modulus ($G^*$) of the rubbery mixture of the tread of the tyre.

6. Method of simulation in accordance with any one of Claims 1 to 5, **characterized in that** the second calculation model uses the peripheral temperature ($T_s$) of the tyre for the calculation of the contact temperature ($T_c$) on entry of the contact surface.

7. Method of simulation in accordance with any one of the preceding claims, **characterized in that** each iterative phase is preceded by a preparatory phase (7) in the course of which are calculated contingent quantities, including the dimensions of the contact area, by means of a subset of the said equations and as a function of the values allocated to the dynamic parameters and to the specific parameters, each contingent quantity being utilized in the said iterative phase with a value which was allocated to it during the preparatory phase.

8. Application of the method in accordance with any one of the preceding claims to the real-time simulation of the dynamic behaviour of a vehicle equipped with a chassis and with several tyres in a situation of rolling on the ground, in which application the first model at least is utilized for each tyre and associated with a given model of chassis dynamics, in which the chassis model provides at least the said first model, for each tyre, with the values of some at least of the dynamic parameters, and in which the chassis model utilizes, for each tyre, the values of the longitudinal loads, of the transverse loads, and of the self-alignment torque that are obtained by the implementation of the first model at least.

9. Application according to Claim 9 of the method in accordance with any one of Claims 1 to 7 to the real-time simulation of the dynamic behaviour of a vehicle equipped with a chassis and with several tyres in a situation of rolling on the ground, in which application each of the first, second and third models is utilized for each tyre and associated with a given model of chassis dynamics, in which the chassis model provides the said models, for each tyre, with the values of some at least of the dynamic parameters, and in which the chassis model utilizes, for each tyre, the values of the longitudinal loads, of the transverse loads, and of the self-alignment torque that are obtained by the implementation of the said first, second and third models.

## Figure 1

## Figure 2

## Figure 3

Figure 4

Figure 5

Figure 6

Grandeurs
dynamiques
d'entrée

Grandeurs
de sortie

Taux de glissement

Angle de dérive

Angle de carrossage

Charge

Vitesse

Pression de gonflage

Température de l'air

Température du sol

Temps

Températures
initiales du pneu

- Équations de la
mécanique & thermique
pneu

- méthode de calcul
temps réel

Effort longitudinal

Effort latéral

Couple d'auto-alignement

Température interne de
la gomme

Température de surface
du pneu

Paramètres
spécifiques d'entrée

Figure 7

Figure 8

Limite d'adhérence

Défilement
des points
du sol

Y

X

X

δ'

a

entrée

Cisaillement sans glissement

d_Y  O

N

dF

K

b

Cisaillement avec glissement

sortie

-a

Trace des points de la
bande de roulement

Trace des points du sommet

Figure 9

Figure 10

Figure 11

Figure 12

FIG. 13

**EP 2 062 176 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1371534 A
- EP 1516751 A
- US 20010020386 A

**Littérature non-brevet citée dans la description**

- **M. PACEJKA.** *Magic Formula,* 1996
- **EBBOTT T. G. ; HOHMAN R. L. ; JEUSETTE J .-P. ; KERCHMAN V.** Tire Temperature And Rolling Résistance Prédiction With Finite Element Analysis. *Tire Science & Technology,* Janvier 1999, vol. 27 (1), 2-21